# EUROPÄISCHE PATENTANMELDUNG

(11) **EP 2 075 529 A2**
(43) Veröffentlichungstag der Anmeldung: **01.07.2009**
(21) Anmeldenummer: 08022286.2
(22) Anmeldetag: 22.12.2008
(51) Int. Cl.: G01B 13/10

(54) **Verfahren zur Vermessung von Bohrungen**

(30) Priorität: 24.12.2007 DE 102007062679
(71) Anmelder: STOTZ FEINMESSTECHNIK GmbH, D-70839 Gerlingen (DE)
(72) Erfinder: Stamenkovic, Milan, 70469 Stuttgart (DE)
(74) Vertreter: Manitz, Finsterwald & Partner GbR

(57) **Zusammenfassung**

Eine Vorrichtung zur Vermessung von Bohrungen umfasst eine in eine Bohrung einführbare Messsonde und Mittel zum Bestimmen des Durchmessers der Bohrung. Die Messsonde ist in einem Gehäuse mit einer Austrittsöffnung angeordnet, deren Durchmesser um ein mehrfaches größer ist als der Durchmesser der Messsonde. Es sind Mittel vorgesehen, durch welche die Position der Bohrung relativ zum Gehäuse und/oder zur Messsonde oder umgekehrt bestimmbar ist.

## Beschreibung

Die vorliegende Erfindung betrifft eine Vorrichtung zur Vermessung von Bohrungen, insbesondere Kleinbohrungen mit einem Durchmesser kleiner als 1 mm, in einem Messobjekt, insbesondere Werkstück, mit einer in die Bohrung einführbaren Messsonde, insbesondere einem pneumatischen Messdorn, und Mitteln zum Bestimmen des Durchmessers der Bohrung, insbesondere eine pneumatische Längenmesseinrichtung.

Derartige Messeinrichtungen sind bekannt und werden beispielsweise bei der Qualitätsprüfung von dünnen Kanälen in Werkstücken eingesetzt. Bei kleinen Bohrungen kann es jedoch schwierig sein, die Messsonde zum Einführen in die Bohrung exakt zu positionieren. Weiterhin besteht oft das Bedürfnis, eine Bohrung entlang ihrer gesamten Tiefe zu vermessen, also durchzuscannen. Zu diesem Zweck muss die Messsonde innerhalb der Bohrung parallel zu deren Ausrichtung verschoben werden, was ebenfalls aufwändig sein kann. Mit herkömmlichen pneumatischen Messvorrichtungen sind zudem wegen des in der Messsonde vorhandenen Luftzufuhrkanals Bohrungen von weniger als 0,3 mm Durchmesser nicht vermessbar.

Es ist daher eine Aufgabe der Erfindung, eine Messvorrichtung der genannten Art bereitzustellen, welche die oben genannten Nachteile vermeidet.

Die Aufgabe wird zum einen durch eine Vorrichtung mit den Merkmalen von Anspruch 1 gelöst. Erfindungsgemäß ist die Messsonde in einem Gehäuse mit einer Austrittsöffnung angeordnet, deren Durchmesser um ein mehrfaches größer ist als der Durchmesser der Messsonde und durch die die Messsonde zumindest so weit ausfahrbar ist, dass sie zur Vermessung in eine Bohrung eingreift, und dass Mittel vorgesehen sind, durch welche die Position der Bohrung relativ zum Gehäuse und/oder zur Messsonde oder umgekehrt bestimmbar ist.

Bei einer derart gestalteten Messvorrichtung ist es nicht mehr notwendig, die Messsonde exakt mit der zu vermessenden Bohrung fluchtend auszurichten. Es genügt vielmehr, das Gehäuse mit der Austrittsöffnung derart an die Oberfläche des Messobjekts anzulegen, dass sich die zu vermessende Bohrung innerhalb der Austrittsöffnung befindet. Dies ist aufgrund des relativ großen Durchmessers der Austrittsöffnung einfach und schnell durchführbar. Anschließend wird die Position der Bohrung ermittelt und in Beziehung zur Position der Messsonde gesetzt. Nun kann die Messsonde verschoben werden, bis sie sich genau mittig über der Bohrung befindet. In dieser Stellung kann die Messsonde zur Durchführung einer Messung in die Bohrung ausgefahren werden. Die Ausrichtung der Messvorrichtung relativ zur Messobjektoberfläche bleibt während des Verschiebens und auch während des Ausfahrens erhalten, da das Gehäuse stets flächig auf dem Messobjekt abgestützt ist.

Das Prinzip der pneumatischen Längenmessung wird beispielsweise bei der Qualitätsprüfung von Einspritzdüsen für Kraftfahrzeuge angewandt, deren feine Kanäle zum Erzeugen von Einspritzdrücken von 2000 bar und mehr ausgelegt sind und die eine Durchmessergenauigkeit von weniger als 1 µm erfordern. Das der Erfindung zugrundeliegende Prinzip der Ermittlung der Bohrungsposition in einer Gehäuseöffnung ist jedoch nicht auf pneumatische Messdorne beschränkt, sondern kann auf beliebige in Bohrungen einzuführende Messsonden angewendet werden.

Gemäß einer Ausgestaltung der Erfindung umfasst die Messsonde einen Druckluftzufuhrkanal und wenigstens zwei Luftaustrittsdüsen. Der Druckluftzufuhrkanal kann über eine Zufuhrleitung, welche durch die Wand des Gehäuses hindurchgeführt ist, mit Druckluft gespeist werden. Die Luftaustrittsdüsen befinden sich bevorzugt an einem axialen Ende des Messdorns und weisen radial nach außen. Da die Luftdurchflussmenge durch den Druckluftzufuhrkanal in definierter Weise von dem Abstand zwischen der Bohrungswand und der jeweiligen Luftaustrittsdüse abhängt, kann über eine Druck- oder Strömungsmessung der Durchmesser der Bohrung ermittelt werden.

Gemäß einer weiteren Ausgestaltung der Erfindung weist das Gehäuse wenigstens einen Entlüftungskanal auf. Dies ermöglicht die Vermessung von Sacklochbohrungen, die bei einem eng an die Messobjektoberfläche angelegten Gehäuse aufgrund der fehlenden Abströmungsmöglichkeit einer pneumatischen Vermessung sonst nicht zugänglich wären.

Die der Erfindung zugrundeliegende Aufgabe wird zum anderen durch eine Vorrichtung mit den Merkmalen von Anspruch 4 gelöst. Erfindungsgemäß ist die Messsonde in einem Gehäuse mit einer Austrittsöffnung angeordnet, deren Durchmesser um ein mehrfaches größer ist als der Durchmesser der Messsonde und durch die die Messsonde zumindest so weit ausfahrbar ist, dass sie zur Vermessung in eine Bohrung eingreift, wobei eine im Inneren des Gehäuses mündende Druckluftzufuhr vorgesehen ist und um die Austrittsöffnung des Gehäuses eine Dichtung zur Abdichtung der Austrittsöffnung gegenüber der Messobjektoberfläche vorgesehen ist. Weiterhin sind an der Messsonde erfindungsgemäß Mittel zum Erzeugen einer Drosselstelle in der Bohrung vorgesehen.

Erfindungsgemäß wurde erkannt, dass die Anordnung der Messsonde in einem Gehäuse mit einer Austrittsöffnung die Möglichkeit eröffnet, den im Inneren der Messsonde verlaufenden Druckluftzufuhrkanal sowie die Luftaustrittsdüsen wegzulassen und stattdessen die Druckluftzufuhr über das Gehäuse vorzusehen. Aufgrund der Abdichtung kann dem Gehäuse zugeführte Luft nur über die von der Messsonde in der Bohrung erzeugte Drosselstelle abströmen. Die Abströmungsrate hängt somit wiederum maßgeblich von dem Durchmesser der Bohrung ab, sodass also eine pneumatische Bohrungsvermessung ohne einen Luftkanal im Inneren der Messsonde durchführbar ist. Dadurch ist es möglich, die Messsonde selbst wesentlich dünner auszubilden und somit auch besonders kleine Bohrungen, beispielsweise im Bereich von 0,05 mm bis 0,3 mm, zu vermessen. Darüberhinaus ergeben sich durch den Wegfall des innenliegenden Luftkanals sowie der feinen Luftaustrittsdüsen Vorteile bei der Herstellung der Messsonde.

Als Dichtung kann mindestens ein O-Ring um die Austrittsöffnung des Gehäuses vorgesehen sein. Vorzugsweise sind zwei konzentrische O-Ringe um die Austrittsöffnung des Gehäuses vorgesehen. Die O-Ringe können sich beispielsweise in entsprechend geformten Nuten in der Gehäusewand befinden. Sie ermöglichen auf einfache Weise eine zuverlässige Abdichtung des Gehäuses gegenüber der Messobjektoberfläche.

Gemäß einer Ausführungsform ist in dem Gehäuse ein Kanal vorgesehen, welcher den Bereich zwischen den zwei O-Ringen mit einer Druckluftzufuhr verbindet, und es ist eine Druckmesseinrichtung zur Ermittlung des Drucks in dem Kanal vorgesehen. Dadurch kann eine effektive Überwachung der Abdichtung durchgeführt werden, indem der Druck in dem Kanal mit dem Versorgungsdruck verglichen wird. Dazu kann der Kanal insbesondere parallel zu einer im Inneren des Gehäuses mündenden Druckluftleitung für die Messsonde an die Druckluftzufuhr angeschlossen sein, wobei die Druckmesseinrichtung stromabwärts einer Vordüse angeordnet ist. Sobald der Druck stromabwärts der Vordüse geringer ist als der Versorgungsdruck stromaufwärts der Vordüse, ist davon auszugehen, dass Luft aus dem Bereich zwischen den O-Ringen entweicht, die Abdichtung durch die O-Ringe also nicht korrekt ist. Eine Messung würde in diesem Fall verfälschte Ergebnisse liefern. Deshalb ist bevorzugt eine Auswerteeinrichtung vorgesehen, die dazu ausgebildet ist, ein Warnsignal auszugeben, wenn die Druckdifferenz zwischen dem Kanal und der Druckluftzufuhr einen vorbestimmten Schwellenwert übersteigt.

Weiterhin kann ein Ventil vorgesehen sein, um den Kanal wahlweise mit der gemeinsamen Druckluftzufuhr zu verbinden oder von dieser zu trennen. Wenn der Kanal nicht mit der Druckluftzufuhr, sondern lediglich mit dem Bereich zwischen den O-Ringen in Verbindung steht, kann eine etwaige Undichtigkeit über einen Druckabfall in dem Kanal detektiert werden. Es kann somit während des Messvorgangs der Druck in dem Kanal und somit in dem Bereich zwischen den O-Ringen fortlaufend überwacht werden. Zu diesem Zweck ist vorzugsweise eine Auswerteeinrichtung vorgesehen, die dazu ausgebildet ist, ein Warnsignal auszugeben, wenn bei in Trennstellung befindlichem Ventil eine zeitliche Änderung des Luftdrucks in dem Kanal einen vorbestimmten Schwellenwert übersteigt. Durch das Ventil ist es möglich, zwischen den beiden vorstehend beschriebenen Dichtheitsprüfvarianten umzuschalten. So kann beispielsweise vor der Messung bei in Verbindungsstellung befindlichem Ventil geprüft werden, ob der Druck in dem Kanal nach einer vorgegebenen Druckaufbauzeit signifikant von dem Versorgungsdruck abweicht. Wenn dies nicht der Fall ist, die Abdichtung also ausreichend ist, wird das Ventil in die Trennstellung gestellt und der Messvorgang wird gestartet. Der Druck der in dem Kanal und dem Bereich zwischen den O-Ringen eingeschlossenen Luftmenge wird dabei fortlaufend überwacht, und bei einer unerwünscht hohen Änderung wird der Bediener der Messvorrichtung gewarnt.

Das Gehäuse ist vorzugsweise glockenartig ausgebildet. Es umschließt somit die Messsonde und gegebenenfalls weitere Komponenten und stellt eine stirnseitige Austrittsöffnung zum bequemen Anlegen an eine Messobjektoberfläche bereit.

Innerhalb des Gehäuses kann ferner ein Aktuator angeordnet sein, mittels welchem die Messsonde relativ zu dem Gehäuse in mindestens einer Richtung verstellbar, insbesondere ein- und ausfahrbar ist. Bei einer derartigen Ausgestaltung der Messvorrichtung ist es nicht erforderlich, das Gehäuse auf der Werkstückoberfläche zu verschieben, um die Messsonde an die Position der Bohrung zu bringen. Das Gehäuse kann vielmehr fest an dem Ort verbleiben, an dem es einmal angelegt wurde, während die Messsonde mittels des Aktuators relativ zu dem Gehäuse bis an die Stelle der Bohrung verschoben wird. Bei dem Aktuator kann es sich beispielsweise um ein oder mehrere Piezoantriebselemente, vorzugsweise um ein 3D-Piezopositioniersystem, handeln. In Verbindung mit dem Mittel zum Ermitteln der Position der Bohrung kann ein derartiger Aktuator sogar für eine vollautomatische Positionierung der Messsonde sorgen.

Die Messsonde ist vorzugsweise in einer zur Ausfahrrichtung senkrechten Ebene, insbesondere in einer X-Richtung und in einer dazu senkrechten Y-Richtung, verstellbar. Mit Hilfe eines entsprechenden XY-Aktuators kann somit jeder gewünschte Punkt innerhalb der Austrittsöffnung angefahren werden.

Vorzugsweise ist ein bildgebender Sensor, insbesondere eine Kamera oder ein CCD-Chip, zur Positionserfassung vorgesehen. Ein derartiger Sensor kann die Position einer Bohrung innerhalb der Austrittsöffnung schnell und zuverlässig detektieren und entweder auf einer Anzeige darstellen oder zur Verarbeitung weiterleiten.

Vorzugsweise ist der bildgebende Sensor außerhalb des Gehäuses angeordnet, wobei wenigstens ein Lichtwellenleiter zum Übertragen von Lichtsignalen aus dem Inneren des Gehäuses vorgesehen ist. Im Gehäuse selbst muss dann kein Platz für eine Kamera oder dergleichen zur Verfügung gestellt werden und es ist auch nicht nötig, einen in besonderer Weise miniaturisierten Sensor einzusetzen. Ein Lichtwellenleiter ist hingegen leicht aus dem Inneren des Gehäuses durch die Gehäusewand nach außen zu einem externen Sensor zu führen.

Dem bildgebenden Sensor kann eine Bildverarbeitungseinheit zum automatisierten Auswerten eines erfassten Bildes zugeordnet sein. Moderne Bildbearbeitungsalgorithmen sind in der Lage, schnell und zuverlässig vorgegebene Objekte wie Bohrungsöffnungen zu erkennen und insbesondere von anderen erfassten Objekten wie Verunreinigungen zu unterscheiden. Das Auffinden einer zu vermessenden Bohrung kann somit ohne Bedienereingriff vollautomatisiert erfolgen.

Gemäß einer bevorzugten Ausführungsform ist eine Lichtquelle zum Beleuchten des Messobjekts vorgesehen. Bohrungen auf der Messobjektoberfläche können so besonders zuverlässig detektiert werden. Insbesondere ist eine Erfassung der Bohrungsposition auch bei lichtundurchlässiger Gehäusewand möglich.

Die Lichtquelle ist vorzugsweise außerhalb des Gehäuses angeordnet, wobei wenigstens ein Lichtwellenleiter zum Übertragen von Licht in das Innere des Gehäuses vorgesehen ist. Somit muss die Lichtquelle nicht miniaturisiert sein, sondern kann an einer geeigneten Stelle außerhalb des Gehäuses vorgesehen werden.

Gemäß einer Ausgestaltung der Erfindung ist ein an dem Gehäuse angebrachter Handgriff vorgesehen oder das Gehäuse ist selbst als Handgriff ausgebildet. Ein handgeführter Betrieb der Messvorrichtung wird so erleichtert.

Gemäß einer weiteren Ausführungsform weist die Austrittsöffnung des Gehäuses eine an eine vordefinierte Messobjektform angepasste Krümmung auf. Je nach Anwendungsfall kann es nämlich erforderlich sein, auch Messobjekte mit nicht planarer Oberfläche zu vermessen. Durch eine Anpassung der Form der Austrittsöffnung können im Prinzip Bohrungen in Messobjekten mit beliebig geformter Oberfläche vermessen werden.

Weiterhin kann parallel zu einer im Inneren des Gehäuses mündenden Druckluftleitung für die Messsonde eine Nebenschlussdüse vorgesehen sein. Durch eine derartige Nebenschlussdüse kann eine definierte Luftmenge pro Zeiteinheit außerhalb der Messvorrichtung abgelassen werden. Dadurch lässt sich der Gesamtluftdurchfluss der Vorrichtung erhöhen, um in Bezug auf eine Versorgungsdruck-Kennlinie einen günstigen Arbeitspunkt zu erreichen.

Die Erfindung wird im folgenden beispielhaft anhand der Zeichnung beschrieben.
- Fig. 1: ist eine vereinfachte Schnittansicht einer Vorrichtung zur Vermessung von Bohrungen gemäß einer ersten Variante der Erfindung.
- Fig. 2: ist eine vereinfachte Schnittansicht einer Vorrichtung zur Vermessung von Bohrungen gemäß einer zweiten Variante der Erfindung.
- Fig. 3: ist eine vereinfachte Schnittansicht einer Vorrichtung zur Vermessung von Bohrungen gemäß einer dritten Variante der Erfindung.
- Fig. 4: zeigt Beispiele für Messsonden, die in der Vorrichtung von Fig. 3 einsetzbar sind.
- Fig. 5: ist eine Fotografie der Messsonde gemäß Fig. 3.
- Fig. 6: ist eine schematische Darstellung der Messsonde der Vorrichtung von Fig. 3.
- Fig. 7: ist eine vereinfachte Schnittansicht einer Vorrichtung zur Vermessung von Bohrungen gemäß einer vierten Variante der Erfindung.
- Fig. 8: ist eine Darstellung einer erfindungsgemäßen Vorrichtung zur Vermessung von Bohrungen, die als Handgerät ausgebildet ist.
- Fig. 9: ist eine Darstellung einer Variante der Vorrichtung von Fig. 8.

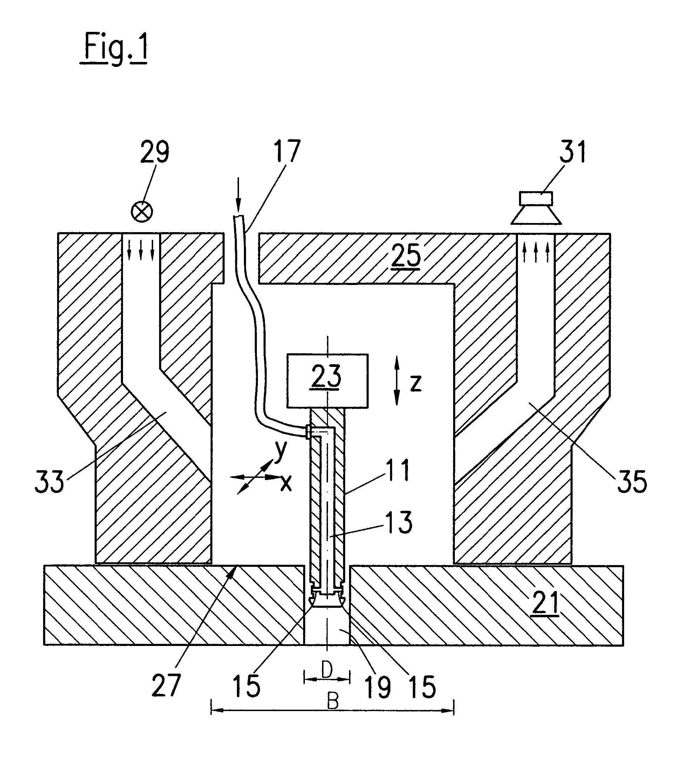

Bei der Variante von Fig. 1 ist eine Messsonde 11 als pneumatischer Messdorn ausgebildet, der einen zentralen Druckluftkanal 13 sowie zwei Luftaustrittsdüsen 15 umfasst. Die Luftaustrittsdüsen 15 sind einander gegenüberliegend an einem axialen Ende des Messdorns 11 angeordnet und weisen radial nach außen. Über eine Zufuhrleitung 17 wird der Messdorn 11 mit Druckluft gespeist, welche als Messluft aus den beiden Luftaustrittsdüsen 15 austritt. Wenn sich die Spitze des Messdorns 11 mit den Luftaustrittsdüsen 15 wie im Bild gezeigt in einer Bohrung 19 eines Messobjekts 21 befindet, so prallt die austretende Messluft auf die Wand der Bohrung 19. Die pro Zeiteinheit ausströmende Menge an Messluft ist daher maßgeblich durch den Abstand zwischen Bohrungswand und Luftaustrittsdüse 15 und somit durch den Durchmesser D der Bohrung 19 bestimmt. Folglich kann über eine Strömungs- bzw. Druckmessung die Lage der Bohrungswand relativ zu den Luftaustrittsdüsen 15 und somit der Durchmesser D der Bohrung 19 ermittelt werden.

Der Messdorn 11 ist an einem Aktuator 23 angebracht, der wiederum mit einem glockenförmigen Gehäuse 25 verbunden ist, sodass das Gehäuse 25 den Messdorn 11 und den Aktuator 23 bis auf eine Austrittsöffnung 27 umschließt. Mittels des Aktuators 23 ist der Messdorn 11 relativ zu dem Gehäuse 25 verschiebbar. Der Aktuator ist im dargestellten Beispiel als dreiachsiges Piezopositioniersystem ausgebildet. Somit kann der Messdorn 11 in einer Z-Richtung in das Gehäuse 25 eingefahren werden, sodass er nicht aus der Austrittsöffnung 27 herausragt, oder er kann zur Vermessung in eine Bohrung 19 ausgefahren werden. Weiterhin kann der Messdorn 11 senkrecht zu der Z-Richtung in einer X-Richtung und einer Y-Richtung parallel zu der Ebene der Austrittsöffnung 27 verschoben werden. Wie aus Fig. 1 hervorgeht, ist der Durchmesser B der Austrittsöffnung 27 um ein mehrfaches größer als der Durchmesser D der Bohrung 19.

Außerhalb des Gehäuses 25 ist eine Lichtquelle 29 sowie eine Kamera 31 vorgesehen. Ein Lichtwellenleiter 33 tritt durch die Wand des Gehäuses 25 hindurch und überträgt Licht (durch Pfeile dargestellt) von der Lichtquelle 29 in das Innere des Gehäuses 25, sodass der Bereich der Oberfläche des Messobjekts 21, welcher sich an der Austrittsöffnung 27 befindet, beleuchtet wird. Weiterhin ist ein Lichtwellenleiter 35 vorgesehen, der durch die Wand des Gehäuses 25 hindurchtritt und ein Bild des Inneren des Gehäuses 25 an die Kamera 31 überträgt. Statt zwei getrennten Lichtwellenleitern 33, 35 können auch eine oder mehrere Endoskop-Lichtwellenleitungen verwendet werden.

Zur Durchführung einer Messung wird der Messdorn 11 in seine eingefahrene Position oder Grundstellung gestellt und das Gehäuse 25 wird derart an die Messobjektoberfläche angelegt, dass sich die zu vermessende Bohrung 19 innerhalb der Austrittsöffnung 27 befindet. Der Messdorn 11 selbst muss sich jedoch nicht exakt über der Bohrung 19 befinden. Nun wird das Innere des Gehäuses 25 mittels der Lichtquelle 29 und dem Lichtwellenleiter 33 beleuchtet und anhand eines durch die Kamera 31 erfassten Bildes der Messobjektoberfläche wird die Position der Bohrung 19 ermittelt. Anhand der ermittelten Position wird der Aktuator 23 derart angesteuert, dass der Messdorn 11 in X-Richtung und Y-Richtung bis zu der Bohrung 19 verfahren wird und sich exakt mittig über ihr befindet. Sobald der Messdorn 11 die korrekte Position in X-Richtung und Y-Richtung erreicht hat, kann er aus der Austrittsöffnung 27 ausgefahren und in die Bohrung 19 eingeführt werden, um in einer gewünschten Tiefe den Durchmesser D der Bohrung 19 zu messen.

Es ist auch möglich, ein Abtasten des Durchmessers D der Bohrung 19 entlang ihrer Tiefe durchzuführen. Für ein derartiges Durchscannen der Bohrung 19 wird der Messdorn 11 unter fortwährendem oder wiederholtem Messen innerhalb der Bohrung 19 in Z-Richtung verschoben.

Sobald die Position der Bohrung 19 bestimmt wurde, kann diese einem Bediener der Vorrichtung angezeigt werden. Diese Anzeige kann verwendet werden, um eine weitere Bewegung des Gehäuses 25 ab diesem Zeitpunkt zu vermeiden. Dies ist insbesondere bei manueller Betätigung der Messvorrichtung vorteilhaft, wobei dann die Anzeige über eine Lampe und/oder über ein Tonsignal erfolgen kann. Wenn die Kamera 31 keine Bohrung 19 innerhalb der Austrittsöffnung 27 detektiert, wird ein Warnsignal ausgegeben oder eine nicht dargestellte Steuereinheit sorgt dafür, dass kein Messvorgang gestartet werden kann. Auf diese Weise wird verhindert, dass der Messdorn 11 gegen die Oberfläche des Messobjekts 21 gefahren und dadurch beschädigt wird. Insbesondere kann das Kamerabild in einer ebenfalls nicht dargestellten Auswerteeinrichtung mittels geeigneter Bildverarbeitungsalgorithmen auf verschiedene in Fachkreisen bekannte Arten automatisch ausgewertet werden.

Für eine Reinigung des Messobjekts 21 können ein oder mehrere Anschlüsse zur Bereitstellung von Blasluft an dem Gehäuse 25 vorgesehen sein.

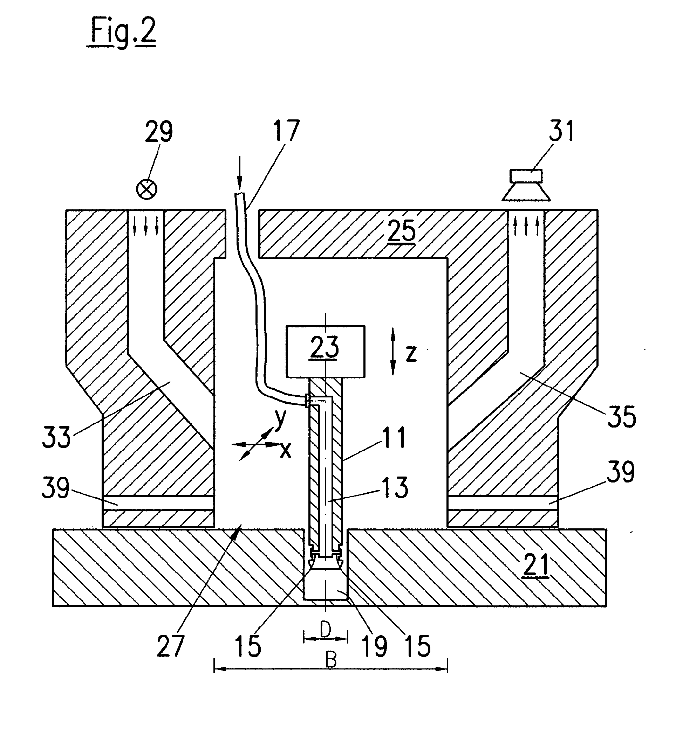

Die aus den Luftaustrittsdüsen 15 ausströmende Messluft kann bei der in Fig. 1 dargestellten Messbedingung durch die Bohrung 19 nach außen abströmen. Diese Möglichkeit entfällt jedoch beim Vermessen von Sackbohrungen. Mit der in Fig. 2 dargestellten Vorrichtung können auch Sackbohrungen vermessen werden, da quer durch die Gehäusewand verlaufende Entlüftungskanäle 39 vorgesehen sind. Die Entlüftungskanäle 39 können selbstverständlich auch an anderer Stelle angeordnet sein als in Fig. 2 gezeigt.

Durch das glockenförmige Gehäuse 25 und die Verschiebung des Messdorns 11 innerhalb des Gehäuses 25 anhand einer ermittelten Bohrungsposition wird die Handhabung der Messvorrichtung wesentlich vereinfacht, da der feine Messdorn 11 nicht mühsam mit der Bohrung 19 ausgerichtet werden muss, sondern stattdessen lediglich das Gehäuse 25 derart an das Messobjekt 21 anzulegen ist, dass die zu vermessende Bohrung 19 von dem Gehäuse 25 umschlossen ist.

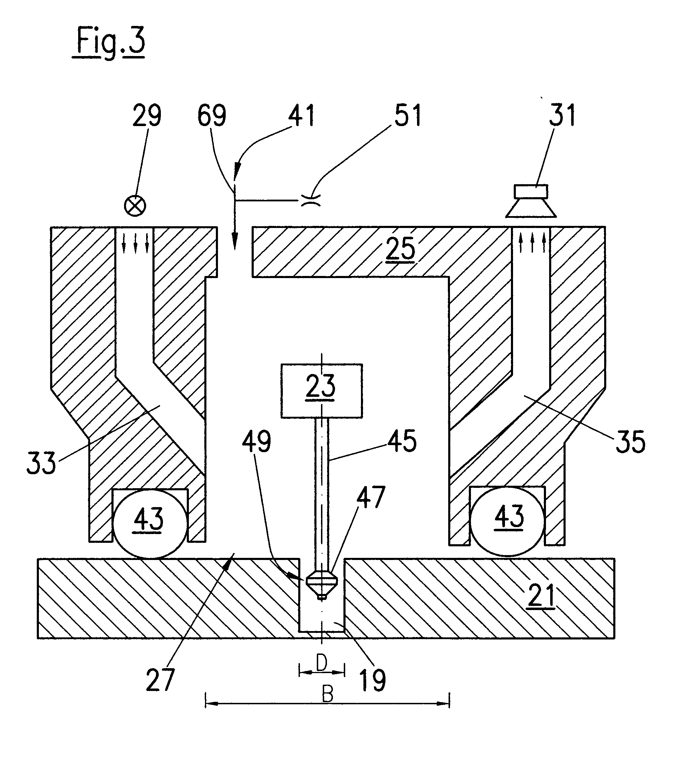

Die Vorrichtung von Fig. 3 umfasst eine Druckluftzufuhr 41 und eine Druckluftleitung 69, die im Inneren des Gehäuses 25 mündet. Ferner ist um die Austrittsöffnung 27 des Gehäuses 25 ein O-Ring 43 vorgesehen, welcher die Austrittsöffnung 27 gegenüber der Oberfläche des Messobjekts 21 abdichtet. Anstelle des Messdorns 11 ist eine Messnadel 45 an dem Aktuator 23 befestigt. An dem dem Aktuator 23 abgewandten Ende der Messnadel 45 ist eine Verdickung 47 ausgebildet.

Der Gebrauch der Vorrichtung gemäß Fig. 3 erfolgt auf analoge Weise wie in Bezug auf Fig. 1 beschrieben, wobei die Verdickung 47 eine Engstelle oder Drosselstelle 49 in der zu vermessenden Bohrung 19 erzeugt, welche eine Luftströmung durch die Bohrung 19 in Abhängigkeit vom Bohrungsdurchmesser D behindert. Da die durch die Druckluftzufuhr 41 gelieferte Druckluft wegen der Abdichtung durch den O-Ring 43 nur durch die Bohrung 19 und folglich durch die Drosselstelle 49 abströmen kann, lässt sich wiederum über eine Messung des aktuellen Durchflusses oder Drucks der Durchmesser D der Bohrung 19 bestimmen. Von Vorteil ist hier insbesondere die einfachere Herstellbarkeit der kanallosen Messnadel 45 gegenüber einem pneumatischen Messdorn 11 mit zentralem Messkanal. Herkömmliche pneumatische Messdorne können außerdem im allgemeinen nicht dünner als etwa 0,3 mm bis 0,5 mm gefertigt werden. Durch die in Fig. 3 dargestellte Messvorrichtung mit externer Luftzufuhr können auch dünnere Messsonden hergestellt und Bohrungen mit Durchmessern von 0,05 mm bis 0,3 mm vermessen werden. Auch bei dieser Vorrichtung kann selbstverständlich ein Durchscannen der Bohrung 19 erfolgen.

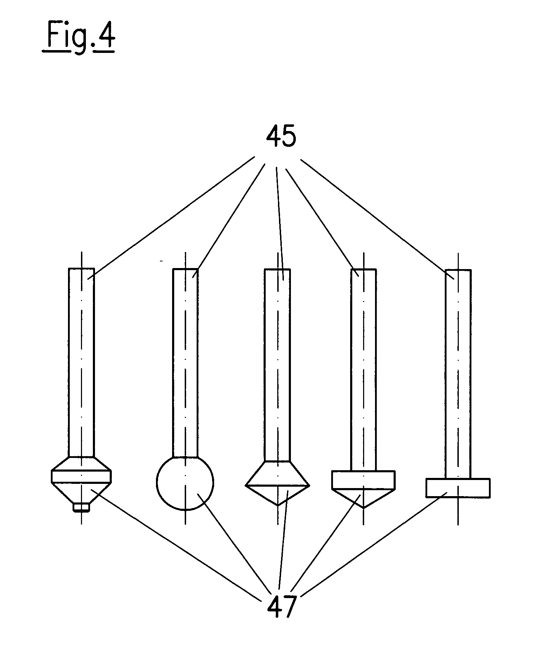

Die Verdickung 47 zum Erzeugen der Drosselstelle 49 kann je nach Anwendungsfall verschiedene Formen und Durchmesser aufweisen. Einige beispielhafte Messnadeln 45 mit jeweiligen Verdickungen 47 sind in Fig. 4 dargestellt.

Wie in Fig. 3 gezeigt, kann auch eine Nebenschlussdüse 51 vorgesehen sein, welche einen Teil der durch die Druckluftzufuhr 41 gelieferten Luft vor dem Gehäuse 25 abströmen lässt. Auf diese Weise kann der GesamtLuftdurchfluss erhöht und der Arbeitspunkt in einen günstigen Bereich der Versorgungsdruck-Kennlinie verschoben werden. Eine solche Nebenschlussdüse kann auch bei den Vorrichtungen von Fig. 1 und 2 eingesetzt werden.

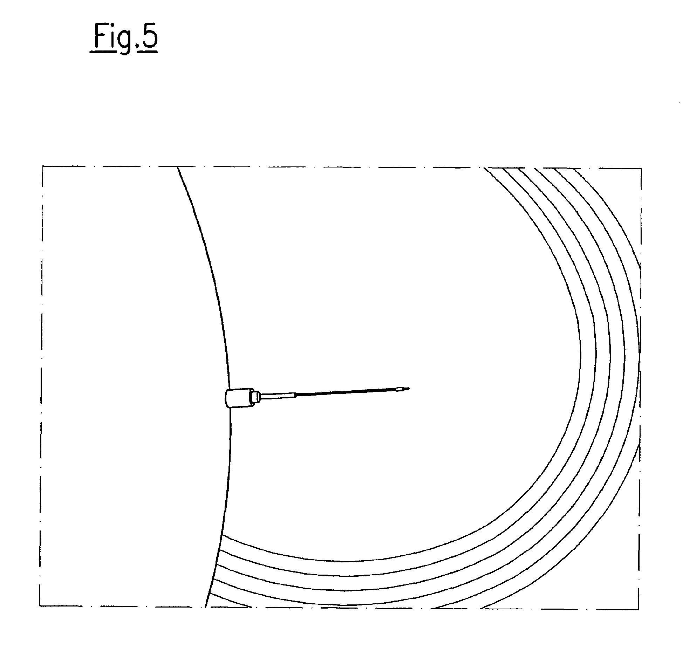

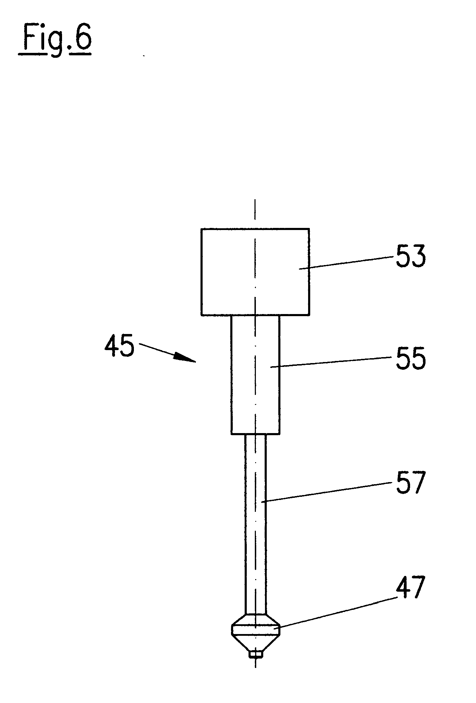

In Fig. 5 und 6 ist eine beipielhafte Messnadel 45 detaillierter dargestellt. In Fig. 5 ist eine Fotografie gezeigt, während in Fig. 6 eine vereinfachte Querschnittsansicht gezeigt ist. Die Messnadel 45 ist in einer zylindrischen Aufnahme 53 von etwa 2 bis 4 mm Durchmesser angeordnet, um ein bequemes Einsetzen in den Aktuator 23 sowie einen einfachen Austausch zu gewährleisten. An die zylindrische Aufnahme 53 schließt sich ein verstärkter Abschnitt 55 an, welcher für eine erhöhte mechanische Stabilität sorgt. Der sich wiederum daran anschließende verjüngte Abschnitt 57 entspricht der in eine auszumessende Bohrung 19 einführbaren Länge, also der Scantiefe. Der Durchmesser der in der Fotografie dargestellten Messnadel 45 beträgt 0,04 mm. Die Verdickung 47 ist 0,25 mm lang und weist einen Durchmesser von 0,062 mm auf. Vom Ende des verstärkten Abschnitts 55 bis zur Spitze ist die Messnadel 45 1,9 mm lang. Insgesamt ist die Messnadel 45 also dünner als ein Haar. Die erreichbaren Messgenauigkeiten liegen im Bereich von ±1 µm.

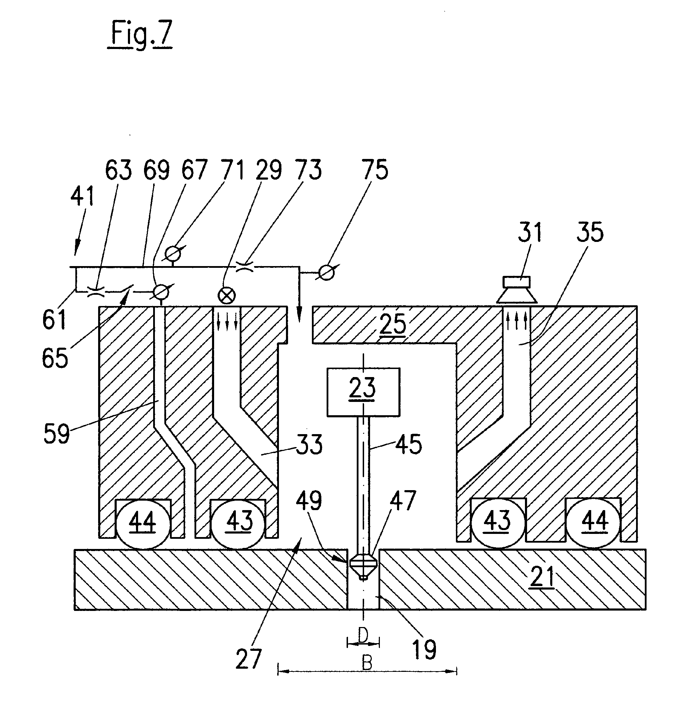

Fig. 7 zeigt eine weitere Ausführungsform einer erfindungsgemäßen Vorrichtung, bei welcher eine verbesserte Abdichtung vorgesehen ist. Diese Ausführungsform eignet sich besonders für Anwendungsfälle, bei denen mit Ölresten oder Spänen auf der Messobjektoberfläche zu rechnen ist. Wie im Bild zu erkennen ist, sind zwei konzentrische O-Ringe 43, 44 um die Austrittsöffnung 27 angeordnet, welche die Abdichtwirkung erhöhen. Darüberhinaus sind Mittel zur Dichtheitsprüfung vorgesehen. Ein Kanal 59 verbindet die Druckluftzufuhr 41 mit dem Bereich zwischen den beiden O-Ringen 43, 44. In die Druckluftleitung 61 zwischen Druckluftzufuhr 41 und Kanal 59 ist eine Prüfvordüse 63, ein Ventil 65 und eine erste Druckmesseinrichtung 67 integriert. In die parallele Druckluftleitung 69, welche die Druckluftzufuhr 41 mit dem Inneren des Gehäuses 25 verbindet, ist eine zweite Druckmesseinrichtung 71, eine Messvordüse 73 und eine dritte Druckmesseinrichtung 75 integriert.

Mit der vorstehend beschriebenen Anordnung kann auf mehrere Arten eine Überwachung der Abdichtung durchgeführt werden. Beispielsweise wird vor dem Beginn einer Messung das Ventil 65 in Verbindungs- oder Durchlassstellung gestellt, sodass der Bereich zwischen den O-Ringen 43, 44 mit Druckluft gespeist wird. Nun wird an der ersten Druckmesseinrichtung 67 und an der zweiten Druckmesseinrichtung 71 jeweils der Druck abgelesen. Sofern die Abdichtung durch die O-Ringe 43, 44 mangelhaft ist, tritt Druckluft aus dem Bereich zwischen den O-Ringen 43, 44 aus und es kommt zu einem Druckabfall über die Prüfvordüse 63. Dieser Druckabfall kann nach Abwarten einer vorgegebenen Druckaufbauzeit über die Differenz zwischen dem an der ersten Druckmesseinrichtung 67 abgelesenen Druck und dem an der zweiten Druckmesseinrichtung 71 abgelesenen Druck festgestellt werden.

Während der Messung wird das Ventil 65 in Trenn- oder Blockierstellung gestellt, sodass der Kanal 59 vom Versorgungsdruck abgeschnitten ist. Eine Undichtigkeit kann nun über eine zeitliche Änderung des an der ersten Druckmesseinrichtung 67 abgelesenen Drucks festgestellt werden.

Die fortlaufende Messung des Drucks in dem Kanal 59 ermöglicht es, auch bei nicht einwandfreier Abdichtung weiterzumessen, indem aus der ermittelten Druckänderung ein geeigneter Korrekturfaktor berechnet und bei der Durchmesserberechnung berücksichtigt wird.

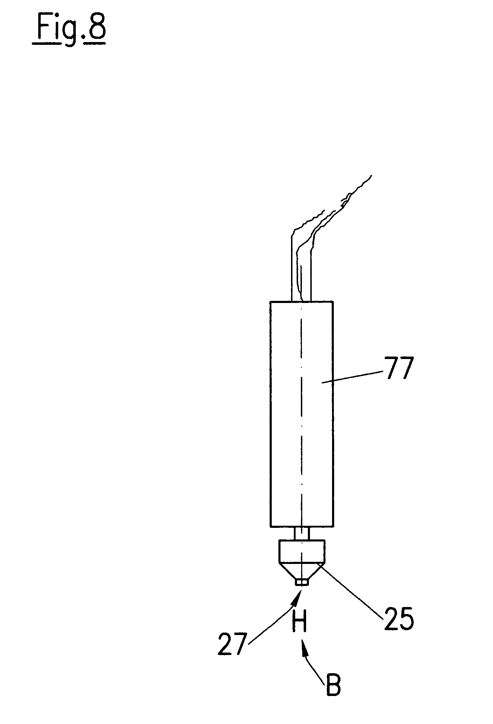

Fig. 8 zeigt eine Seitenansicht einer erfindungsgemäßen Messvorrichtung mit einem Gehäuse 25 und einem Handgriff 77. Der Durchmesser B des Gehäuses 25 an der Austrittsöffnung 27 beträgt bei der dargestellten Variante 2-3 mm. Dieser Wert kann natürlich an die jeweils vorliegenden Messbedingungen angepasst werden. Aufgrund der zuverlässigen Positionierung der Messnadel 45 ist es möglich, auch Bohrungen mit einem Durchmesser von weniger als 0,1 mm mit einem handgeführten Gerät zu vermessen.

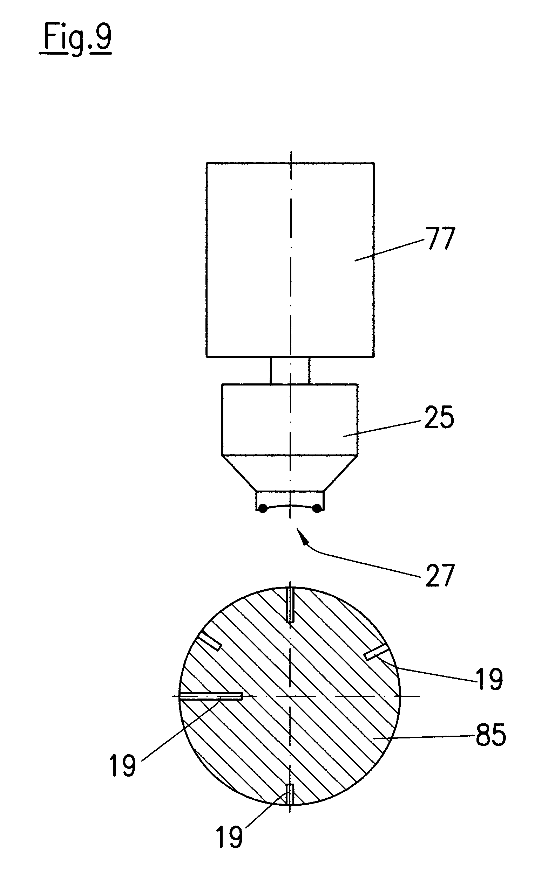

Wie aus Fig. 9 hervorgeht, welche eine alternative Ausführungsform eines Gehäuses 25 darstellt, kann die Form der Austrittsöffnung 27 an eine bestimmte gekrümmte Werkstückoberfläche angepasst sein. Im Beispiel ist zur Vermessung von Bohrungen 19 in einem kreiszylindrischen oder kugelförmigen Messobjekt 85 die Austrittsöffnung 27 mit einer konkaven Wölbung versehen. Es kann jedoch auch ausreichend sein, O-Ringe 43, 44 mit einem entsprechenden Durchmesser vorzusehen, um Oberflächenkrümmungen geringeren Ausmaßes auszugleichen.

Die vorstehend beschriebenen Prinzipien ermöglichen eine schnelle und zuverlässige Positionierung einer in eine Bohrung 19 einzuführende Messsonde. Durch eine automatische Steuerung, insbesondere beruhend auf einer geschlossenen Regelschleife zwischen Kamera 31 und Aktuator 23, können versehentliche Stöße der Messsonde gegen die Messobjektoberfläche vermieden werden. Das Ausmessen sehr kleiner Bohrungen wird möglich, wobei auch ein Scanbetrieb auf einfache Weise realisiert werden kann. Die Verwendung der Kamera 31 hat den weiteren Vorteil, dass ein Verbiegen der Messsonde, also des Messdorns 11 oder der Messnadel 45, erkannt werden kann. Auch eine bleibende Verbiegung kann festgestellt werden. Vorzugsweise wird daher die Messsonde nach der Bestimmung der Position der Bohrung 19 über die Bohrung 19 positioniert und danach abgesenkt. Kurz vor dem Erreichen der Bohrungsöffnung wird mittels der Kamera 31 oder mehrerer Kameras die Position der Messsonde überprüft. Falls die Position aufgrund einer Verbiegung der Messsonde nicht korrekt ist, so kann mittels des Aktuators 23 eine Korrektur herbeigeführt werden, um anschließend die Messsonde in korrekter Lage in die Bohrung 19 einzuführen. Damit ergibt sich eine sehr gute Wiederholgenauigkeit auch bei der Vermessung von sehr kleinen Bohrungen bis hin zu 50 µm.

### Bezugszeichenliste:

- 11: Messdorn
- 13: Druckluftkanal
- 15: Luftaustrittsdüse
- 17: Zufuhrleitung
- 19: Bohrung
- 21: Messobjekt
- 23: Aktuator
- 25: Gehäuse
- 27: Austrittsöffnung
- 29: Lichtquelle
- 31: Kamera
- 33: Lichtwellenleiter
- 35: Lichtwellenleiter
- 39: Entlüftungskanal
- 41: Druckluftzufuhr
- 43: O-Ring
- 44: O-Ring
- 45: Messnadel
- 47: Verdickung
- 49: Drosselstelle
- 51: Nebenschlussdüse
- 53: zylindrische Aufnahme
- 55: verstärkter Abschnitt
- 57: verjüngter Abschnitt
- 59: Kanal
- 61: Druckluftleitung
- 63: Prüfvordüse
- 65: Ventil
- 67: erste Druckmesseinrichtung
- 69: Druckluftleitung
- 71: zweite Druckmesseinrichtung
- 73: Messvordüse
- 75: dritte Druckmesseinrichtung
- 77: Handgriff
- 85: kreiszylindrisches Messobjekt

- D: Durchmesser der Bohrung
- B: Durchmesser der Austrittsöffnung

## Patentansprüche

1. Vorrichtung zur Vermessung von Bohrungen (19), insbesondere Kleinbohrungen mit einem Durchmesser kleiner als 1 mm, in einem Messobjekt (21), insbesondere Werkstück, mit einer in die Bohrung (19) einführbaren Messsonde (11), insbesondere einem pneumatischen Messdorn, und Mitteln zum Bestimmen des Durchmessers der Bohrung (19), insbesondere eine pneumatische Längenmesseinrichtung,
**dadurch gekennzeichnet, dass**
die Messsonde (11) in einem Gehäuse (25) mit einer Austrittsöffnung (27) angeordnet ist, deren Durchmesser (B) um ein mehrfaches größer ist als der Durchmesser der Messsonde (11) und durch die die Messsonde (11) zumindest so weit ausfahrbar ist, dass sie zur Vermessung in eine Bohrung (19) eingreift, und dass
Mittel (29, 31, 33, 35) vorgesehen sind, durch welche die Position der Bohrung (19) relativ zum Gehäuse (25) und/oder zur Messsonde (11) oder umgekehrt bestimmbar ist.

2. Vorrichtung nach Anspruch 1,
**dadurch gekennzeichnet, dass**
die Messsonde (11) einen Druckluftzufuhrkanal (13) und wenigstens zwei Luftaustrittsdüsen (15) umfasst, wobei, bevorzugt, das Gehäuse (25) wenigstens einen Entlüftungskanal (39) aufweist.

3. Vorrichtung zur Vermessung von Bohrungen (19), insbesondere Kleinbohrungen mit einem Durchmesser kleiner als 1 mm, in einem Messobjekt (21), mit einer in die Bohrung (19) einführbaren Messsonde (45) und Mitteln zum Bestimmen des Durchmessers der Bohrung, insbesondere eine pneumatische Längenmesseinrichtung, insbesondere nach Anspruch 1,
**dadurch gekennzeichnet, dass**
die Messsonde (45) in einem Gehäuse (25) mit einer Austrittsöffnung (27) angeordnet ist, deren Durchmesser (B) um ein mehrfaches größer ist als der Durchmesser der Messsonde (45) und durch die die Messsonde (45) zumindest so weit ausfahrbar ist, dass sie zur Vermessung in eine Bohrung (19) eingreift, wobei eine im Inneren des Gehäuses mündende Druckluftzufuhr (41) und um die Austrittsöffnung (27) des Gehäuses (25) eine Dichtung (43) zur Abdichtung der Austrittsöffnung (27) gegenüber der Messobjektoberfläche vorgesehen ist, und dass
an der Messsonde (45) Mittel (47) zum Erzeugen einer Drosselstelle (49) in der Bohrung (19) vorgesehen sind.

4. Vorrichtung nach Anspruch 3,
**dadurch gekennzeichnet, dass**
als Dichtung (43) mindestens ein O-Ring um die Austrittsöffnung (27) des Gehäuses (25) vorgesehen ist, wobei, bevorzugt, zwei konzentrische O-Ringe (43, 44) um die Austrittsöffnung (27) des Gehäuses (25) vorgesehen sind.

5. Vorrichtung nach Anspruch 4,
**dadurch gekennzeichnet, dass**
in dem Gehäuse (25) ein Kanal (59) vorgesehen ist, welcher den Bereich zwischen den zwei O-Ringen (43, 44) mit einer Druckluftzufuhr verbindet, und dass eine Druckmesseinrichtung (67) zur Ermittlung des Drucks in dem Kanal (59) vorgesehen ist, wobei, bevorzugt, der Kanal (59) parallel zu einer im Inneren des Gehäuses (25) mündenden Druckluftleitung (69) für die Messsonde (45) an die Druckluftzufuhr (41) angeschlossen ist und dass die Druckmesseinrichtung (67) stromabwärts einer Vordüse (63) angeordnet ist.

6. Vorrichtung nach Anspruch 5,
**dadurch gekennzeichnet, dass**
eine Auswerteeinrichtung vorgesehen ist, die dazu ausgebildet ist, ein Warnsignal auszugeben, wenn die Druckdifferenz zwischen dem Kanal (59) und der Druckluftzufuhr (41) einen vorbestimmten Schwellenwert übersteigt.

7. Vorrichtung nach einem der Ansprüche 5 oder 6,
**dadurch gekennzeichnet, dass**
ein Ventil (65) vorgesehen ist, um den Kanal (59) wahlweise mit der gemeinsamen Druckluftzufuhr (41) zu verbinden oder von dieser zu trennen, wobei, bevorzugt, eine Auswerteeinrichtung vorgesehen ist, die dazu ausgebildet ist, ein Warnsignal auszugeben, wenn bei in Trennstellung befindlichem Ventil (65) eine zeitliche Änderung des Luftdrucks in dem Kanal (59) einen vorbestimmten Schwellenwert übersteigt.

8. Vorrichtung nach zumindest einem der vorstehenden Ansprüche,
**dadurch gekennzeichnet, dass**
das Gehäuse (25) glockenartig ausgebildet ist.

9. Vorrichtung nach zumindest einem der vorstehenden Ansprüche,
**dadurch gekennzeichnet, dass**
innerhalb des Gehäuses (25) ein Aktuator (23) angeordnet ist, mittels welchem die Messsonde (11, 45) relativ zum Gehäuse (25) in mindestens einer Richtung verstellbar, insbesondere ein- und ausfahrbar ist, wobei, bevorzugt, die Messsonde (11, 45) in einer zur Ausfahrrichtung senkrechten Ebene, insbesondere in einer X-Richtung und in einer dazu senkrechten Y-Richtung, verstellbar ist.

10. Vorrichtung nach zumindest einem der vorstehenden Ansprüche,
**dadurch gekennzeichnet, dass**
ein bildgebender Sensor (31), insbesondere eine Kamera oder ein CCD-Chip, zur Positionserfassung vorgesehen ist, wobei, bevorzugt, der bildgebende Sensor (31) außerhalb des Gehäuses (25) angeordnet ist, wobei wenigstens ein Lichtwellenleiter (35) zum Übertragen von Lichtsignalen aus dem Inneren des Gehäuses (25) vorgesehen ist.

11. Vorrichtung nach Anspruch 10,
**dadurch gekennzeichnet, dass**
dem bildgebenden Sensor (31) eine Bildverarbeitungseinheit zum automatisierten Auswerten eines erfassten Bildes zugeordnet ist.

12. Vorrichtung nach zumindest einem der vorstehenden Ansprüche,
**dadurch gekennzeichnet, dass**
eine Lichtquelle (29) zum Beleuchten des Messobjekts (21) vorgesehen ist, wobei, bevorzugt, die Lichtquelle (29) außerhalb des Gehäuses (25) angeordnet ist, wobei wenigstens ein Lichtwellenleiter (33) zum Übertragen von Licht in das Innere des Gehäuses (25) vorgesehen ist.

13. Vorrichtung nach zumindest einem der vorstehenden Ansprüche,
**dadurch gekennzeichnet, dass**
ein an dem Gehäuse (25) angebrachter Handgriff (77) vorgesehen ist oder dass das Gehäuse (25) selbst als Handgriff ausgebildet ist.

14. Vorrichtung nach zumindest einem der vorstehenden Ansprüche,
**dadurch gekennzeichnet, dass**
die Austrittsöffnung (27) des Gehäuses (25) eine an eine vordefinierte Messobjektform angepasste Krümmung aufweist.

15. Vorrichtung nach zumindest einem der vorstehenden Ansprüche,
**dadurch gekennzeichnet, dass**
parallel zu einer im Inneren des Gehäuses (25) mündenden Druckluftleitung (69) für die Messsonde (45) eine Nebenschlussdüse (51) vorgesehen ist.
